# EUROPEAN PATENT APPLICATION

(11) **EP 4 830 965 A1**
(43) Date of publication of application: **28.10.2026**
(21) Application number: 24809735.4
(22) Date of filing: 30.10.2024
(51) Int. Cl.: B60K 28/16, B60T 8/17, B60T 8/175, B60W 30/18

(54) **CONTROL DEVICE AND CONTROL METHOD**

(30) Priority: 22.12.2023 JP 2023217437
(71) Applicant: Robert Bosch GmbH, 70442 Stuttgart (DE)
(72) Inventor: OIKAWA, Yuya, Yokohama-shi, Kanagawa 224-8501 (JP)
(74) Representative: Isarpatent
(86) International application number: PCT/IB2024/060700
(87) International publication number: WO 2025/133734

(57) **Abstract**

The present invention provides a control apparatus and a control method capable of suppressing a decrease in driving feeling of a rider of a straddle-type vehicle.

In a control apparatus (20) and a control method according to the present invention, an execution unit of the control apparatus (20) executes acceleration suppressing operation in which acceleration of the straddle-type vehicle (1) is suppressed to suppress slipping of a wheel of the straddle-type vehicle (1) caused during running of the straddle-type vehicle (1). The execution unit executes easing operation in which a suppression degree of acceleration by the acceleration suppressing operation is automatically eased.

## Description

### Technical Field

The present disclosure relates to a control apparatus and a control method capable of suppressing a decrease in driving feeling of a rider of a straddle-type vehicle.

### Background Art

Conventionally, various technologies to assist a rider in driving of a straddle-type vehicle, such as a motorcycle, have been proposed. For example, PTL 1 discloses the technology related to operation to suppress acceleration of a straddle-type vehicle.

### Citation List

### Patent Literature

PTL 1: JP2017-114342A

### Summary of Invention

### Technical Problem

Meanwhile, operation to suppress acceleration of a straddle-type vehicle includes operation that is performed to suppress slipping of a wheel of the straddle-type vehicle caused during running of the straddle-type vehicle. Such operation suppresses slipping of the wheel of the straddle-type vehicle caused during running of the straddle-type vehicle, and thus can improve safety of the straddle-type vehicle as a result. Here, driving feeling of a rider of the straddle-type vehicle may decrease due to excessive suppression of acceleration of the straddle-type vehicle by the above-described operation.

The present invention is made in view of the problem and provides a control apparatus and a control method capable of suppressing a decrease in driving feeling of a rider of a straddle-type vehicle.

### Solution to Problem

A control apparatus according to the present invention is a control apparatus that controls behavior of a straddle-type vehicle. The control apparatus includes an execution unit that executes acceleration suppressing operation in which acceleration of the straddle-type vehicle is suppressed to suppress slipping of a wheel of the straddle-type vehicle caused during running of the straddle-type vehicle. The execution unit executes easing operation in which a suppression degree of the acceleration by the acceleration suppressing operation is automatically eased.

A control method according to the invention is a control method for controlling behavior of a straddle-type vehicle. The method includes executing, by an execution unit of a control apparatus, acceleration suppressing operation in which acceleration of the straddle-type vehicle is suppressed to suppress slipping of a wheel of the straddle-type vehicle caused during running of the straddle-type vehicle, and executing, by the execution unit, easing operation in which a suppression degree of the acceleration by the acceleration suppressing operation is automatically eased.

### Advantageous Effects of Invention

In the control apparatus and the control method according to the present invention, the execution unit of the control apparatus executes the acceleration suppressing operation in which acceleration of the straddle-type vehicle is suppressed to suppress slipping of the wheel of the straddle-type vehicle caused during running of the straddle-type vehicle. The execution unit executes the easing operation in which the suppression degree of the acceleration by the acceleration suppressing operation is automatically eased. Therefore, a situation in which acceleration of the straddle-type vehicle is excessively suppressed by the acceleration suppressing operation can be suppressed. Thereby, a decrease in driving feeling of a rider of the straddle-type vehicle can be suppressed.

### Brief Description of Drawings

Fig. 1 is a schematic view illustrating a schematic configuration of a straddle-type vehicle according to an embodiment of the present invention.
Fig. 2 is a view for explaining a lean angle of the straddle-type vehicle according to an embodiment of the invention.
Fig. 3 is a view for explaining a slide angle of the straddle-type vehicle according to an embodiment of the invention.
Fig. 4 is a block diagram illustrating an example of a functional configuration of a control apparatus according to an embodiment of the invention.
Fig. 5 is a flowchart illustrating an example of a processing flow performed by the control apparatus according to an embodiment of the invention.
Fig. 6 is a chart illustrating a first example of transition of a suppression level in acceleration suppressing operation according to an embodiment of the invention.
Fig. 7 is a chart illustrating a second example of transition of a suppression level in acceleration suppressing operation according to an embodiment of the invention.

### Description of Embodiments

Hereinafter, a control apparatus and a control method according to the present invention are described with reference to the drawings.

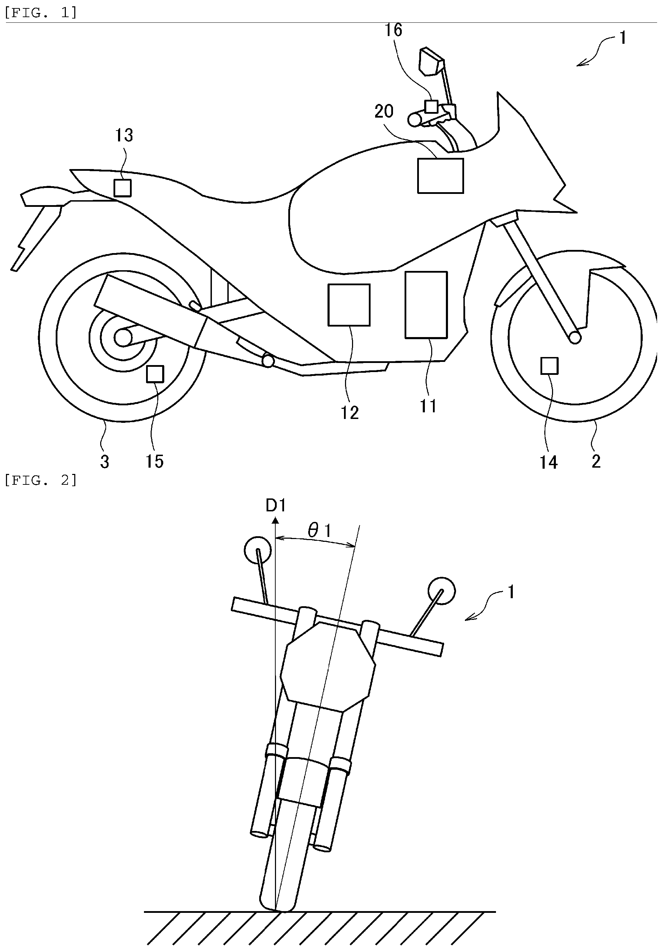

Note that, below, a control apparatus that is used for a two-wheeled motorcycle is described (see a straddle-type vehicle 1 in Fig. 1). However, a vehicle subject to the control by the control apparatus according to the invention may be a straddle-type vehicle other than a two-wheeled motorcycle. The straddle-type vehicle means a vehicle which a rider rides astride. Examples of the straddle-type vehicle include a motorcycle (a two-wheeled motorcycle, a three-wheeled motorcycle, and the like) and a cycle. The motorcycle includes a vehicle whose power source is an engine, and a vehicle whose power source is an electric motor. Examples the motorcycle include a motorbike, a scooter, and an electric scooter. The cycle means a vehicle that is capable of propelling on a road by pedal effort applied by a rider to pedals. The cycle includes an ordinary cycle, an electronically power assisted cycle, and an electric cycle.

Moreover, below, a case in which an engine (specifically, an engine 11 in Fig 1 described later) is mounted as a drive source capable of outputting motive power to drive a drive wheel is described. However, a drive source (for example, an electric motor) other than the engine may be mounted as the drive source, or a plurality of drive sources may be mounted.

Moreover, below, a case in which a control unit (specifically, a hydraulic pressure control unit 12 in Fig. 1 described later) that controls hydraulic pressure of brake fluid is adopted as a control unit for braking force caused at a wheel is described. However, as the control unit for braking force caused at a wheel, a control unit that controls a position of a braking part of a wheel itself by an electrical signal (what is called brake-by-wire) may be adopted.

Moreover, configurations, operation, and the like described below are merely illustration, and the control apparatus and the control method according to the invention are not limited to the case with such configurations, operation, and the like.

Moreover, below, the same or similar description is simplified or omitted as appropriate. In the drawings, regarding the same or similar members or parts, denotation of reference signs thereto is omitted or the same reference signs are given thereto. Further, illustration of fine structures may be simplified or omitted as appropriate.

### <Configuration of Straddle-Type Vehicle>

A configuration of the straddle-type vehicle 1 according to an embodiment of the invention is described with reference to Figs. 1 to 4.

Fig. 1 is a schematic view illustrating a schematic configuration of the straddle-type vehicle 1. The straddle-type vehicle 1 is a two-wheeled motorcycle that corresponds to an example of the straddle-type vehicle according to the invention. As illustrated in Fig. 1, the straddle-type vehicle 1 includes a front wheel 2, a rear wheel 3, the engine 11, the hydraulic pressure control unit 12, an inertial measurement unit (IMU) 13, a front-wheel speed sensor 14, a rear-wheel speed sensor 15, an input unit 16, and a control apparatus (ECU) 20.

The engine 11 corresponds to an example of a drive source of the straddle-type vehicle 1, and is capable of outputting motive power to drive a drive wheel (specifically, the rear wheel 3). For example, the engine 11 includes one or more cylinders each having a combustion chamber formed therein, a fuel injection valve that injects fuel toward the combustion chamber, and a spark plug. Fuel is injected from the fuel injection valve to form, inside the combustion chamber, mixture gas containing air and fuel, and the mixture gas is ignited by the spark plug to combust. Therefore, a piston provided inside the cylinder reciprocates, and a crankshaft rotates. Moreover, a throttle valve is provided to an intake pipe of the engine 11, and an amount of air-intake to the combustion chamber changes in accordance with a throttle opening, which is an opening of the throttle valve.

The hydraulic pressure control unit 12 is a unit that functions to control braking force caused at a wheel. For example, the hydraulic pressure control unit 12 is provided on a hydraulic passage coupling a master cylinder to a wheel cylinder, and includes a component (for example, a control valve and a pump) to control brake hydraulic pressure of the wheel cylinder. By operation of the component of the hydraulic pressure control unit 12 being controlled, braking force caused at a wheel is controlled. Note that the hydraulic pressure control unit 12 may control each braking force caused at both of the front wheel 2 and the rear wheel 3, or may control braking force caused at only one of the front wheel 2 and the rear wheel 3.

The inertial measurement unit 13 includes a three-axial gyro sensor and a three-directional acceleration sensor, and detects a posture of the straddle-type vehicle 1. For example, the inertial measurement unit 13 is provided to a trunk of the straddle-type vehicle 1. The inertial measurement unit 13 may include only a part of the three-axial gyro sensor and/or a part of the three-directional acceleration sensor.

For example, the inertial measurement unit 13 detects a lean angle of the straddle-type vehicle 1 and outputs the detection result. The inertial measurement unit 13 may detect another physical quantity that can substantially be converted into the lean angle of the straddle-type vehicle 1. Fig. 2 is a view for explaining a lean angle of the straddle-type vehicle 1. The lean angle corresponds to an angle θ1 (that is, an angle indicating an incline of a vehicle body (specifically, the trunk) of the straddle-type vehicle 1 in a roll direction with respect to a vertically-up direction D1) illustrated in Fig. 2.

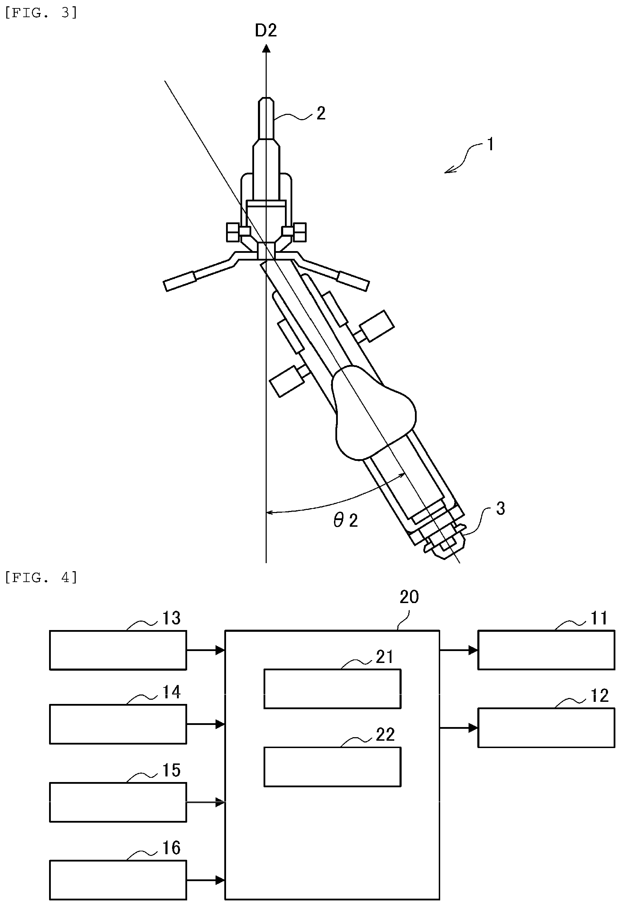

Moreover, for example, the inertial measurement unit 13 detects a slide angle of the straddle-type vehicle 1 and outputs the detection result. The inertial measurement unit 13 may detect another physical quantity that can substantially be converted into the slide angle of the straddle-type vehicle 1. Fig. 3 is a view for explaining a slide angle of the straddle-type vehicle 1. The slide angle corresponds to an angle θ2 (that is, an angle indicating an incline of the rear wheel 3 with respect to a traveling direction D2 of the straddle-type vehicle 1) illustrated in Fig. 3. Occurrence of tail-slide in which the vehicle body of the straddle-type vehicle 1 skids leads to an increase in slide angle (the angle θ2 in Fig. 3). For example, the inertial measurement unit 13 may detect a slide angle of the straddle-type vehicle 1 by identifying the traveling direction D2 of the straddle-type vehicle 1 and the posture of the straddle-type vehicle 1 based on the detection result of each sensor of the inertial measurement unit 13.

The front-wheel speed sensor 14 is a wheel speed sensor that detects a wheel speed of the front wheel 2 (for example, a rotational frequency per unit time [rpm], a movement distance per unit time [km/h], and the like of the front wheel 2), and outputs the detection result. The front-wheel speed sensor 14 may detect another physical quantity that can substantially be converted into the wheel speed of the front wheel 2. The front-wheel speed sensor 14 is provided to the front wheel 2.

The rear-wheel speed sensor 15 is a wheel speed sensor that detects a wheel speed of the rear wheel 3 (for example, a rotational frequency per unit time [rpm], a movement distance per unit time [km/h], and the like of the rear wheel 3), and outputs the detection result. The rear-wheel speed sensor 15 may detect another physical quantity that can substantially be converted into the wheel speed of the rear wheel 3. The rear-wheel speed sensor 15 is provided to the rear wheel 3.

The input unit 16 accepts various types of operation by a rider. For example, the input unit 16 is provided to a steering wheel and includes a push button and the like used for operation by the rider. Information related to the operation by the rider using the input unit 16 is output to the control apparatus 20.

The control apparatus 20 controls behavior of the straddle-type vehicle 1. For example, a part or the whole of the control apparatus 20 is configured by a microcomputer, a microprocessor unit, or the like. Furthermore, for example, a part or the whole of the control apparatus 20 may be configured by an updatable one such as firmware, or may be a program module or the like that is executed via a command from a CPU or the like. For example, the control apparatus 20 may be a single control apparatus, or may be divided into a plurality of parts.

Fig. 4 is a block diagram illustrating an example of a functional configuration of the control apparatus 20. As illustrated in Fig. 4, for example, the control apparatus 20 includes an acquisition unit 21 and an execution unit 22. Moreover, the control apparatus 20 communicates with each device of the straddle-type vehicle 1.

The acquisition unit 21 acquires information from each device of the straddle-type vehicle 1 and outputs the information to the execution unit 22. For example, the acquisition unit 21 acquires information from the inertial measurement unit 13, the front-wheel speed sensor 14, the rear-wheel speed sensor 15, and the input unit 16. Note that, herein, acquiring information may include extraction or generation (for example, arithmetic computing) of information.

The execution unit 22 controls operation of each device of the straddle-type vehicle 1 to execute various controls. For example, the execution unit 22 controls operation of the engine 11 and the hydraulic pressure control unit 12.

Here, the execution unit 22 can execute acceleration suppressing operation. In the acceleration suppressing operation, acceleration of the straddle-type vehicle 1 is suppressed to suppress slipping (that is, idling) of a wheel (specifically, the rear wheel 3 that is the drive wheel) of the straddle-type vehicle 1 caused during running of the straddle-type vehicle 1. Specifically, the execution unit 22 can execute first acceleration suppressing operation and second acceleration suppressing operation as the acceleration suppressing operation.

The first acceleration suppressing operation is executed to avoid, in advance, occurrence of slipping of the rear wheel 3 during running of the straddle-type vehicle 1 while the slipping does not occur. In the first acceleration suppressing operation, the execution unit 22 controls an increase rate of driving force that acts on the straddle-type vehicle 1 in such a manner that the increase rate becomes equal to or less than an upper-limit increase rate.

The increase rate of driving force means an amount of increase in driving force per unit time. That is, the increase rate of driving force means a rate of increase in driving force over time. For example, the upper-limit increase rate is set to a value at which occurrence of slipping of the rear wheel 3 is avoided. The execution unit 22 controls the engine 11, basically, in such a manner that a demanded driving force that is driving force demanded by a rider acts on the straddle-type vehicle 1. For example, as an operation amount of acceleration operation by a rider increases, the execution unit 22 specifies a larger value as the demanded driving force. Here, in a case in which the increase rate of the demanded driving force exceeds the upper-limit increase rate, the execution unit 22 controls the engine 11 so that the increase rate of driving force that acts on the straddle-type vehicle 1 becomes the upper-limit increase rate. Therefore, soaring of driving force is suppressed, and occurrence of slipping of the rear wheel 3 is avoided in advance.

The second acceleration suppressing operation is executed to alleviate slipping of the rear wheel 3 during running of the straddle-type vehicle 1 while the slipping actually occurs. In the second acceleration suppressing operation, the execution unit 22 controls driving force that acts on the straddle-type vehicle 1 in such a manner that a slipping degree of the rear wheel 3 becomes a target slipping degree.

The slipping degree is an index indicating a degree of slipping of the rear wheel 3 with respect to a road surface. For example, the slipping degree may be represented by a value obtained by dividing a difference between a vehicle speed of the straddle-type vehicle 1 and a wheel speed of the rear wheel 3 by the vehicle speed. For example, the acquisition unit 21 may acquire the vehicle speed of the straddle-type vehicle 1 based on the detection results of the front-wheel speed sensor 14 and the rear-wheel speed sensor 15. For example, the target slipping degree is set to a degree low enough to suppress slipping of the rear wheel 3. For example, in a case in which the slipping degree of the rear wheel 3 exceeds the target slipping degree, the execution unit 22 controls the engine 11 to reduce driving force that acts on the straddle-type vehicle 1. Therefore, the slipping degree of the rear wheel 3 decreases, and slipping of the rear wheel 3 eases.

As described above, the acceleration suppressing operation may include not only the second acceleration suppressing operation but also the first acceleration suppressing operation. The second acceleration suppressing operation is executed to alleviate slipping of the rear wheel 3 during running of the straddle-type vehicle 1 while the slipping actually occurs. The first acceleration suppressing operation is executed to avoid, in advance, occurrence of slipping of the rear wheel 3 during running of the straddle-type vehicle 1 while the slipping does not occur.

### <Operation of Control Apparatus>

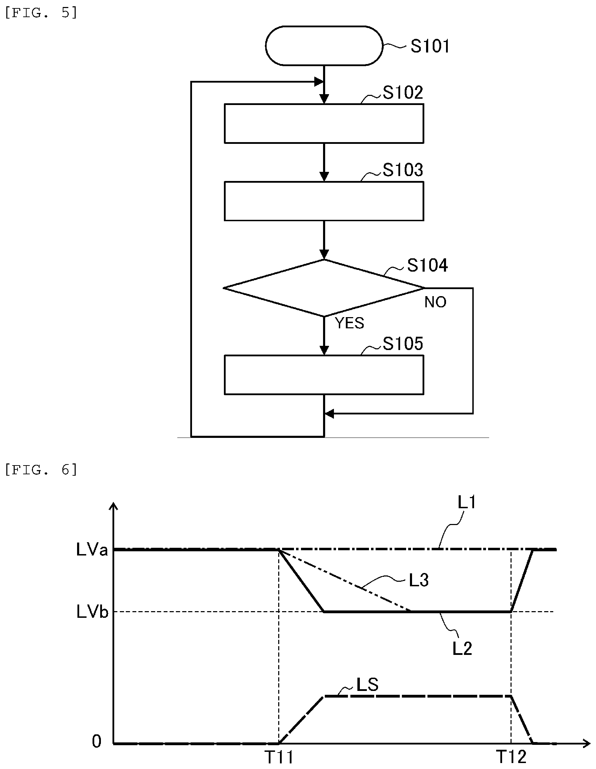

Operation of the control apparatus 20 according to an embodiment of the invention is described with reference to Figs. 5 to 7.

As described above, the execution unit 22 of the control apparatus 20 can execute the acceleration suppressing operation in which acceleration of the straddle-type vehicle 1 is suppressed to suppress slipping of the rear wheel 3 caused during running of the straddle-type vehicle 1. Here, excessive suppression of acceleration of the straddle-type vehicle 1 by the acceleration suppressing operation may decrease driving feeling of a rider of the straddle-type vehicle 1. Therefore, in this embodiment, the execution unit 22 of the control apparatus 20 executes easing operation in which a suppression degree of acceleration by the acceleration suppressing operation is automatically eased, and therefore suppression of a decrease in driving feeling of a rider of the straddle-type vehicle 1 is achieved. Below, exemplary processing performed by such a control apparatus 20 is describe.

Fig. 5 is a flowchart illustrating an example of a processing flow performed by the control apparatus 20. Step S101 in Fig. 5 corresponds to a start of a control flow illustrated in Fig. 5. For example, the control flow illustrated in Fig. 5 is started in a case in which the acceleration suppressing operation is activated.

In the following description, a suppression degree of acceleration by the acceleration suppressing operation is represented by a numerical value that is referred to as a suppression level. The execution unit 22 changes the suppression level of the acceleration suppressing operation, and thus can change the suppression degree of acceleration by the acceleration suppressing operation.

For example, in the first acceleration suppressing operation in which the increase rate of driving force that acts on the straddle-type vehicle 1 is controlled to be equal to or less than the upper-limit increase rate, the lower the upper limit increase rate, the more strongly acceleration of the straddle-type vehicle 1 is suppressed. That is, the lower the upper-limit increase rate, the higher the suppression degree of acceleration. Therefore, by the execution unit 22 increasing the suppression level, the execution unit 22 can decrease the upper-limit increase rate and increase the suppression degree of acceleration. On the other hand, by the execution unit 22 decreasing the suppression level, the execution unit 22 can increase the upper-limit increase rate and decrease the suppression degree of acceleration.

Moreover, for example, in the second acceleration suppressing operation in which driving force that acts on the straddle-type vehicle 1 is controlled in such a manner that the slipping degree of the rear wheel 3 becomes the target slipping degree, the lower the target slipping degree, the more strongly acceleration of the straddle-type vehicle 1 is suppressed. That is, the lower the target slipping degree, the higher the suppression degree of acceleration. Therefore, by the execution unit 22 increasing the suppression level, the execution unit 22 can decrease the target slipping degree and increase the suppression degree of acceleration. On the other hand, by the execution unit 22 decreasing the suppression level, the execution unit 22 can increase the target slipping degree and decrease the suppression degree of acceleration.

When the control flow illustrated in Fig. 5 starts, at Step S102, the execution unit 22 determines a reference suppression level of the acceleration suppressing operation based on manual setting information set by a rider of the straddle-type vehicle 1.

Basically, the execution unit 22 sets the suppression level of the acceleration suppressing operation as the reference suppression level and executes the acceleration suppressing operation. However, as will be described later, the execution unit 22 may execute the easing operation to decrease the suppression level of the acceleration suppressing operation with respect to the reference suppression level. The manual setting information is information related to manual setting of the suppression level set by a rider of the straddle-type vehicle 1. For example, a rider can perform operation by using the input unit 16 to input the manual setting information into the control apparatus 20. Therefore, the rider can manually change the reference suppression level. For example, the manual setting information may be information directly indicating the reference suppression level desired by the rider, or may be information indicating an increase or a decrease in the reference suppression level with respect to the current reference suppression level.

Subsequent to Step S102, at Step S103, the execution unit 22 determines an ease level of the easing operation in which the suppression degree of acceleration by the acceleration suppressing operation is automatically eased.

The ease level is a level representing, by a numerical value, an ease degree at which the suppression degree of acceleration by the acceleration suppressing operation is eased by the easing operation. Specifically, the ease level is a level indicating to what degree the suppression level of the acceleration suppressing operation is lowered in the easing operation. The higher the ease level, the larger an amount of decrease in the suppression level of the acceleration suppressing operation in the easing operation. On the other hand, the lower the ease level, the smaller an amount of decrease in the suppression level of the acceleration suppressing operation in the easing operation.

Below, an example in which the ease level is at a value within a numerical value range of 0 or more and 1 or less is described. That is, as the ease level approaches 1, an amount of decrease in the suppression level of the acceleration suppressing operation in the easing operation increases. On the other hand, as the ease level approaches 0, an amount of decrease in the suppression level of the acceleration suppressing operation in the easing operation decreases. Note that in a case in which the ease level is 0, the processing to decrease the suppression level of the acceleration suppressing operation is not performed. That is, in a case in which the ease level is larger than 0, the execution unit 22 executes the easing operation, while in the case in which the ease level is 0, the execution unit 22 does not execute the easing operation.

Here, the execution unit 22 determines the ease level based on various information. Below, an example of information used for determination of the ease level is described.

For example, the execution unit 22 may determine the ease level based on acceleration intention information. The acceleration intention information is information related to acceleration intention of a rider of the straddle-type vehicle 1. The acceleration intention means intention of at what acceleration a rider wants to accelerate the straddle-type vehicle 1.

For example, the execution unit 22 may use demanded driving force information related to driving force demanded by a rider (that is, the demanded driving force) as the acceleration intention information to determine the ease level. The demanded driving force information may be, for example, information directly indicating the demanded driving force itself, or may be another information that can substantially be converted into the demanded driving force. For example, it can be determined that a rider has intention to accelerate the straddle-type vehicle 1 at higher acceleration as the demanded driving force increases. In the case in which the rider has the intention to accelerate the straddle-type vehicle 1 at high acceleration, suppression of acceleration of the straddle-type vehicle 1 by the acceleration suppressing operation is likely to cause a decrease in driving feeling of the rider of the straddle-type vehicle 1. Therefore, for example, the execution unit 22 increases the ease level as the demanded driving force increases.

Note that the acceleration intention information may be information other than the demanded driving force information. For example, the acceleration intention information may be information related to a gear stage of a transmission of the straddle-type vehicle 1. For example, it can be determined that a rider has intention to accelerate the straddle-type vehicle 1 at high acceleration as the gear stage is a lower speed stage.

Moreover, for example, the execution unit 22 may determine the ease level based on running state information. The running state information is information related to a running state of the straddle-type vehicle 1. For example, the running state information is used to estimate running stability of the straddle-type vehicle 1.

For example, the execution unit 22 may use slip state information related to a slipping state of a wheel (specifically, the rear wheel 3) as the running state information to determine the ease level. For example, the slip state information may be information directly indicating the slipping degree of the rear wheel 3 itself, or may be another information that can substantially be converted into the slipping degree. For example, it can be determined that running stability of the straddle-type vehicle 1 increases as the slipping degree of the rear wheel 3 decreases. When running stability of the straddle-type vehicle 1 is high, there is less necessity to improve safety by suppressing acceleration of the straddle-type vehicle 1 by the acceleration suppressing operation. Therefore, for example, the execution unit 22 increases the ease level as the slipping degree of the rear wheel 3 decreases.

For example, the execution unit 22 may use turn state information related to a turning state of the straddle-type vehicle 1 as the running state information to determine the ease level. For example, the turn state information includes information on a lean angle of the straddle-type vehicle 1 as described with reference to Fig. 2. For example, the acquisition unit 21 can acquire the information on the lean angle of the straddle-type vehicle 1 from the inertial measurement unit 13. For example, it can be determined that running stability of the straddle-type vehicle 1 increases as the lean angle decreases. As described above, when running stability of the straddle-type vehicle 1 is high, there is less necessity to improve safety by suppressing acceleration of the straddle-type vehicle 1 by the acceleration suppressing operation. Therefore, for example, the execution unit 22 increases the ease level as the lean angle decreases.

Note that the turn state information may be information other than the information on the lean angle of the straddle-type vehicle 1. For example, the turn state information may be information on a yaw rate of the straddle-type vehicle 1, information on lateral acceleration of the straddle-type vehicle 1, information on a rudder angle of the straddle-type vehicle 1, or map information. Moreover, the acquisition unit 21 may apply image processing to an image captured by a camera to identify the turning state of the straddle-type vehicle 1. The camera is provided to the straddle-type vehicle 1 to image the periphery of the straddle-type vehicle 1. The information identified in this way by using the image captured by the camera may also correspond to an example of the turn state information.

For example, the execution unit 22 may use tail-slide state information related to a tail-sliding state of the straddle-type vehicle 1 as the running state information to determine the ease level. For example, the tail-slide state information includes information on a slide angle of the straddle-type vehicle 1 as described with reference to Fig. 3. For example, the acquisition unit 21 can acquire the information on the slide angle of the straddle-type vehicle 1 from the inertial measurement unit 13. For example, it can be determined that running stability of the straddle-type vehicle 1 increases as the slide angle decreases. As described above, when running stability of the straddle-type vehicle 1 is high, there is less necessity to improve safety by suppressing acceleration of the straddle-type vehicle 1 by the acceleration suppressing operation. Therefore, for example, the execution unit 22 increases the ease level as the slide angle decreases.

Described above is the examples of the information that may be used to determine the ease level. Here, all the information described above may be used to determine the ease level, or any part of the information described above may be used to determine the ease level, by the execution unit 22. For example, the execution unit 22 may comprehensively consider the demanded driving force information, the slip state information (for example, the information on the slipping degree of the rear wheel 3), the turn state information (for example, the information on the lean angle of the straddle-type vehicle 1), and the tail-slide state information (for example, the information on the slide angle of the straddle-type vehicle 1) to determine the ease level. Note that in the case in which multiple types of information are used to determine the ease level, weight of the respective types of information in the determination of the ease level may be different from one another. However, in addition to or alternatively to the information described above, the execution unit 22 may use information other than the information described above to determine the ease level.

Subsequent to Step S103, at Step S104, the execution unit 22 determines whether the ease level determined at Step S103 is more than 0.

If the ease level is determined to be more than 0, (Step S104: YES), the processing proceeds to Step S105. Then, at Step S105, the execution unit 22 executes the easing operation at the ease level determined at Step S103, and returns to Step S102. On the other hand, if the ease level is determined to be 0 (Step S104: NO), the processing returns to Step S102 without execution of the easing operation.

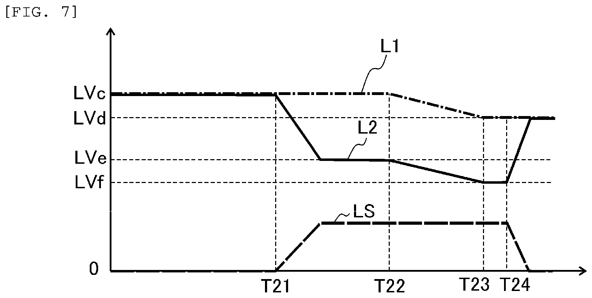

Below, an example of transition of the suppression level in the acceleration suppressing operation is described with reference to Figs. 6 and 7.

Fig. 6 is a chart illustrating a first example of transition of the suppression level in the acceleration suppressing operation. Fig. 6 shows transition of the suppression level, where a horizontal axis indicates time and a vertical axis indicates the suppression level. Moreover, in Fig. 6, the reference suppression level is indicated by a one-dot chain line L1, and the suppression level that is actually used in the acceleration suppressing operation is indicated by a solid line L2. In addition, in Fig. 6, transition of the ease level of the easing operation is indicated by a broken line LS. Note that in the example of Fig. 6 a level LVa and a level LVb are shown as examples of a value of the suppression level, and the level LVb is lower than the level LVa.

In the example of Fig. 6, before a time T11, as indicated by the broken line LS, the ease level of the easing operation is 0. Therefore, before the time T11, the easing operation is not executed, and the suppression level of the acceleration suppressing operation is the level LVa that is the reference suppression level (that is, the suppression degree determined based on the manual setting information) indicated by the one-dot chain line L1. Then, at the time T11, as indicated by the broken line LS, the ease level of the easing operation increases from 0 to be a value larger than 0. Therefore, after the time T11, the easing operation is executed, and the suppression level indicated by the solid line L2 decreases with respect to the reference suppression level indicated by the one-dot chain line L1 to be the level LVb. In this manner, in the easing operation, the execution unit 22 automatically eases the suppression degree (that is, the suppression level) determined based on the manual setting information. Then, after a time T12, the suppression level returns to the reference suppression level and the easing operation ends.

As described above, the execution unit 22 can change the suppression degree based on the manual setting information set by a rider of the straddle-type vehicle 1. For example, in a case in which, at the time T11, the control apparatus 20 receives input of the manual setting information indicating to decrease the reference suppression level while the easing operation is not executed, after the time T11, as indicated by a two-dot chain line L3, the execution unit 22 decreases the reference suppression level and the suppression level used actually. Here, after the time T11, a rate of decrease in the suppression level indicated by the solid line L2 is higher than a rate of decrease in the suppression level indicated by the two-dot chain line L3. In this manner, in the easing operation, the execution unit 22 decreases the suppression level at a change rate higher than a change rate of the suppression level when the suppression level changes based on the manual setting information.

As described above, a rider can manually change the reference suppression level. However, in some situations, operation to manually change the reference suppression level may be bothersome for a rider. For example, operation to press a switch by using a hand holding a steering wheel may be bothersome for a rider, for example, during running on an unpaved road. In such a situation, automatically decreasing the suppression level by the easing operation can save time and effort for a rider to operate.

Moreover, as described above, the change rate of the suppression level when the suppression level changes based on the manual setting information is set to be low. This is because drastic change in the suppression level causes behavior of the straddle-type vehicle 1 to change drastically beyond rider's expectation, thus resulting in lower safety. On the other hand, the easing operation is executed in a situation in which a rider has intention to accelerate the straddle-type vehicle 1 at high acceleration and in which running stability of the straddle-type vehicle 1 is high. Therefore, an increase in change rate of the suppression level is less likely to cause the problem describe above.

Fig. 7 is a chart illustrating a second example of transition of the suppression level in the acceleration suppressing operation. Fig. 7 shows, similarly to Fig. 6, transition of the suppression level, where a horizontal axis indicates time and a vertical axis indicates the suppression level. Moreover, in Fig. 7, similarly to Fig. 6, the reference suppression level is indicated by the one-dot chain line L1, and the suppression level that is actually used in the acceleration suppressing operation is indicated by the solid line L2. In addition, in Fig. 7, similarly to Fig. 6, transition of the ease level of the easing operation is indicated by the broken line LS. Note that in the example of Fig. 7 a level LVc, a level LVd, a level LVe, and a level LVf are shown as examples of a value of the suppression level, and the level LVc, the level LVd, the level LVe, and the level LVf are levels smaller in this order.

In the example of Fig. 7, before a time T21, as indicated by the broken line LS, the ease level of the easing operation is 0. Therefore, before the time T21, the easing operation is not executed, and the suppression level of the acceleration suppressing operation is the level LVc that is the reference suppression level (that is, the suppression degree determined based on the manual setting information) indicated by the one-dot chain line L1. Then, at the time T21, as indicated by the broken line LS, the ease level of the easing operation increases from 0 to be a value larger than 0. Therefore, after the time T21, the easing operation is executed, and the suppression level indicated by the solid line L2 decreases with respect to the reference suppression level indicated by the one-dot chain line L1 to be the level LVe.

In the example of Fig. 7, then, at a time T22 in execution of the easing operation, the control apparatus 20 receives input of the manual setting information indicating to decrease the reference suppression level, and after the time T22, as indicated by the one-dot chain line L1, the reference suppression level decreases to the level LVd. Specifically, from the time T22 to a time T23, the execution unit 22 decreases the reference suppression level at a low decrease rate similar to the decrease rate of the suppression level indicated by the two-dot chain line L3 in the example of Fig. 6 described above. Here, from the time T22 to the time T23, the execution unit 22 decreases the suppression level indicated by the solid line L2 to the level LVf at a decrease rate the same as the decrease rate of the reference suppression level. In this manner, the execution unit 22 further changes the suppression level based on the manual setting information during execution of the easing operation. Therefore, even during execution of the easing operation, a rider can manually change the suppression level. Then, after a time T24, the suppression level returns to the reference suppression level, and the easing operation ends.

Described above with reference to Figs. 5 to 7 is the example of the processing performed by the control apparatus 20. However, the processing performed by the control apparatus 20 may be processing in which a change is added to the exemplary processing described above.

For example, in the example, the execution unit 22 determines the ease level of the easing operation based on various information and executes the easing operation at the determined ease level. However, the execution unit 22 may determine whether to execute the easing operation based on various information and may execute the easing operation at a given ease level if the easing operation is determined to be executed. For example, the execution unit 22 may execute the easing operation if conditions that the demanded driving force is more than a reference value, the slipping degree of the rear wheel 3 is less than a reference value, the lean angle of the straddle-type vehicle 1 is less than a reference value, and the slide angle of the straddle-type vehicle 1 is less than a reference value are satisfied, and may not execute the easing operation if these conditions are not satisfied. Note that each of the reference values described above is set so that, for example, whether a rider has intention to accelerate the straddle-type vehicle 1 at high acceleration and running stability of the straddle-type vehicle 1 is high may appropriately be determined.

Moreover, for example, in the example, the execution unit 22 changes the suppression degree (in the example, the ease level) based on the manual setting information set by a rider of the straddle-type vehicle 1, and, in the easing operation, automatically eases the suppression degree determined based on the manual setting information. However, a rider may not be able to manually change the suppression degree. In this case, for example, the reference suppression level is fixed to a value set in advance, and the execution unit 22 decreases the suppression level with respect to such a reference suppression level in the easing operation.

Moreover, for example, in the above-describe example, a parameter that changes in accordance with the suppression level of the acceleration suppressing operation includes the upper-limit increase rate and the target slipping degree. However, the parameter may be a parameter other than the upper-limit increase rate and the target slipping degree (for example, a gain in feedback control of the slipping degree).

### <Effect of Control Apparatus>

An effect of the control apparatus 20 according to an embodiment of the invention is described.

The control apparatus 20 includes the execution unit 22 that executes the acceleration suppressing operation in which acceleration of the straddle-type vehicle 1 is suppressed to suppress slipping of the wheel (in the example, the rear wheel 3) of the straddle-type vehicle 1 caused during running of the straddle-type vehicle 1. The execution unit 22 executes the easing operation in which the suppression degree (in the example, the suppression level) of acceleration by the acceleration suppressing operation is automatically eased. Therefore, a situation in which acceleration of the straddle-type vehicle 1 is excessively suppressed by the acceleration suppressing operation can be suppressed. Thereby, a decrease in driving feeling of a rider of the straddle-type vehicle 1 can be suppressed.

Preferably, in the control apparatus 20, the execution unit 22 executes the easing operation based on the acceleration intention information that is information related to the acceleration intention of a rider of the straddle-type vehicle 1. Therefore, the ease degree (in the example, the ease level) at which the suppression degree of acceleration by the acceleration suppressing operation is eased by the easing operation, or whether to execute the easing operation can appropriately be changed in consideration of rider's acceleration intention. For example, in a situation in which a rider has intention to accelerate the straddle-type vehicle 1 at high acceleration, the ease level can be increased. Therefore, a decrease in driving feeling of a rider of the straddle-type vehicle 1 can appropriately be suppressed.

Preferably, in the control apparatus 20, the acceleration intention information includes the demanded driving force information related to driving force demanded by the rider. Therefore, appropriate changing of the ease degree (in the example, the ease level) at which the suppression degree of acceleration by the acceleration suppressing operation is eased by the easing operation, or whether to execute the easing operation can appropriately be implemented in consideration of rider's acceleration intention.

Preferably, in the control apparatus 20, the execution unit 22 executes the easing operation based on the running state information that is information related to the running state of the straddle-type vehicle 1. Therefore, the ease degree (in the example, the ease level) at which the suppression degree of acceleration by the acceleration suppressing operation is eased by the easing operation, or whether to execute the easing operation can appropriately be changed in consideration of the running state of the straddle-type vehicle 1. For example, in a situation in which running stability of the straddle-type vehicle 1 is high, the ease level can be increased. Therefore, a decrease in driving feeling of a rider of the straddle-type vehicle 1 can further appropriately be suppressed.

Preferably, in the control apparatus 20, the running state information includes the slip state information related to the slipping state of the wheel (in the example, the rear wheel 3). Therefore, appropriate changing of the ease degree (in the example, the ease level) at which the suppression degree of acceleration by the acceleration suppressing operation is eased by the easing operation, or whether to execute the easing operation can appropriately be implemented in consideration of the running state of the straddle-type vehicle 1.

Preferably, in the control apparatus 20, the running state information includes the turn state information related to the turning state of the straddle-type vehicle 1. Therefore, appropriate changing of the ease degree (in the example, the ease level) at which the suppression degree of acceleration by the acceleration suppressing operation is eased by the easing operation, or whether to execute the easing operation can appropriately be implemented in consideration of the running state of the straddle-type vehicle 1.

Preferably, in the control apparatus 20, the running state information includes the tail-slide state information related to the tail-sliding state of the straddle-type vehicle 1. Therefore, appropriate changing of the ease degree (in the example, the ease level) at which the suppression degree of acceleration by the acceleration suppressing operation is eased by the easing operation, or whether to execute the easing operation can appropriately be implemented in consideration of the running state of the straddle-type vehicle 1.

Preferably, in the control apparatus 20, the execution unit 22 changes the suppression degree (in the example, the suppression level) based on the manual setting information set by a rider of the straddle-type vehicle 1, and automatically eases, in the easing operation, the suppression degree determined based on the manual setting information. Therefore, a decrease in driving feeling of a rider can be suppressed by the easing operation while the rider can manually change the suppression degree. Furthermore, automatically decreasing the suppression level by the easing operation can save time and effort for a rider to operate.

Preferably, in the control apparatus 20, in the easing operation, the execution unit 22 eases the suppression degree at a change rate higher than a change rate of the suppression degree when the suppression degree (in the example, the suppression level) changes based on the manual setting information. Therefore, the suppression degree can rapidly be changed in the easing operation where an increase in change rate of the suppression degree has small influence on safety.

Preferably, in the control apparatus 20, the execution unit 22 further changes the suppression degree (in the example, the suppression level) based on the manual setting information during execution of the easing operation. Therefore, even during execution of the easing operation, a rider can manually change the suppression degree.

Preferably, in the control apparatus 20, the acceleration suppressing operation includes the first acceleration suppressing operation in which an increase rate of driving force that acts on the straddle-type vehicle 1 is controlled to be equal to or less than the upper-limit increase rate. Therefore, a situation in which acceleration of the straddle-type vehicle 1 is excessively suppressed by the first acceleration suppressing operation can be suppressed. Thereby, a decrease in driving feeling of a rider of the straddle-type vehicle 1 due to the first acceleration suppressing operation can be suppressed.

Preferably, in the control apparatus 20, the acceleration suppressing operation includes the second acceleration suppressing operation in which driving force that acts on the straddle-type vehicle 1 is controlled in such a manner that the slipping degree of the wheel (in the example, the rear wheel 3) becomes the target slipping degree. Therefore, a situation in which acceleration of the straddle-type vehicle 1 is excessively suppressed by the second acceleration suppressing operation can be suppressed. Thereby, a decrease in driving feeling of a rider of the straddle-type vehicle 1 due to the second acceleration suppressing operation can be suppressed.

Note that the execution unit 22 may execute the easing operation in both of the first acceleration suppressing operation and the second acceleration suppressing operation of the acceleration suppressing operation, or may execute the easing operation in only one of the first acceleration suppressing operation and the second acceleration suppressing operation.

The invention is not limited to the description of the embodiment. For example, only a part of the embodiment may be practiced.

### Reference Signs List

1: Straddle-type vehicle
2: Front wheel
3: Rear wheel
11: Engine
12: Hydraulic pressure control unit
13: Inertial measurement unit
14: Front-wheel speed sensor
15: Rear-wheel speed sensor
16: Input unit
20: Control apparatus
21: Acquisition unit
22: Execution unit
D1: Vertically-up direction
D2 Traveling direction
L1: One-dot chain line
L2: Solid line
L3: Two-dot chain line
T11: Time
T12: Time
T21: Time
T22: Time
T23: Time
T24: Time
θ1: Angle
θ2: Angle

## Claims

1. A control apparatus (20) configured to control behavior of a straddle-type vehicle (1), the control apparatus comprising:
an execution unit (22) configured to execute acceleration suppressing operation in which acceleration of the straddle-type vehicle (1) is suppressed to suppress slipping of a wheel (3) of the straddle-type vehicle (1) caused during running of the straddle-type vehicle (1), wherein
the execution unit (22) is configured to execute easing operation in which a suppression degree of the acceleration by the acceleration suppressing operation is automatically eased.

2. The control apparatus according to claim 1, wherein the execution unit (22) is configured to execute the easing operation based on acceleration intention information that is information related to acceleration intention of a rider of the straddle-type vehicle (1).

3. The control apparatus according to claim 2, wherein the acceleration intention information includes demanded driving force information related to driving force demanded by the rider.

4. The control apparatus according to claim 1, wherein the execution unit (22) is configured to execute the easing operation based on running state information that is information related to a running state of the straddle-type vehicle (1).

5. The control apparatus according to claim 4, wherein the running state information includes slip state information related to a slipping state of the wheel (3).

6. The control apparatus according to claim 4, wherein the running state information includes turn state information related to a turning state of the straddle-type vehicle (1).

7. The control apparatus according to claim 4, wherein the running state information includes tail-slide state information related to a tail-sliding state of the straddle-type vehicle (1).

8. The control apparatus according to claim 1, wherein the execution unit (22) is configured to:
change the suppression degree based on manual setting information set by a rider of the straddle-type vehicle (1); and
automatically ease, in the easing operation, the suppression degree determined based on the manual setting information.

9. The control apparatus according to claim 8, wherein, in the easing operation, the execution unit (22) is configured to ease the suppression degree at a change rate higher than a change rate of the suppression degree when the suppression degree changes based on the manual setting information.

10. The control apparatus according to claim 8, wherein the execution unit (22) is configured to further change the suppression degree based on the manual setting information during execution of the easing operation.

11. The control apparatus according to any one of claims 1 to 10, wherein the acceleration suppressing operation includes first acceleration suppressing operation in which an increase rate of driving force that acts on the straddle-type vehicle (1) is controlled to be equal to or less than an upper-limit increase rate.

12. The control apparatus according to any one of claims 1 to 10, wherein the acceleration suppressing operation includes second acceleration suppressing operation in which driving force that acts on the straddle-type vehicle (1) is controlled in such a manner that a slipping degree of the wheel (3) becomes a target slipping degree.

13. A control method for controlling behavior of a straddle-type vehicle (1), comprising the steps of:
executing, by an execution unit (22) of a control apparatus (20), acceleration suppressing operation in which acceleration of the straddle-type vehicle (1) is suppressed to suppress slipping of a wheel (3) of the straddle-type vehicle (1) caused during running of the straddle-type vehicle (1); and
executing, by the execution unit (22), easing operation in which a suppression degree of the acceleration by the acceleration suppressing operation is automatically eased.
